# DEMANDE DE BREVET EUROPEEN

(11) **EP 0 963 817 A1**
(43) Date de publication de la demande: **15.12.1999**
(21) Numéro de dépôt: 99401313.4
(22) Date de dépôt: 01.06.1999
(51) Int. Cl.: B25J 9/16

(54) **Procédé de commande en position d'un solide mobile mu par des actionneurs selon au moins deux degrés de liberté en rotation, et plate-forme mobile mettant en oeuvre un tel procédé**

(30) Priorité: 09.06.1998 FR 9807242
(71) Demandeur: THOMSON-CSF, 75008 Paris (FR)
(72) Inventeur: Couvet, Serge, THOMSON-CSF P.I.D.B., 94117 Arcueil Cedex (FR); Poquillon, Thomas, THOMSON-CSF P.I.D.B., 94117 Arcueil Cedex (FR)
(74) Mandataire: Chaverneff, Vladimir

(57) **Abrégé**

Pour obtenir des déplacements sans résonance et sans accélérations résiduelles parasites de la plate-forme mobile d'un simulateur à plate-forme légère et mue par des actionneurs électriques, on interpole les ordres de position, émis par le calculateur central à basse fréquence, de façon isotrope, selon la méthode des quaternions, c'est-à-dire que la commande de chacun des actionneurs tient compte des commandes de tous les autres actionneurs.

## Description

La présente invention se rapporte à un procédé de commande en position d'un solide mobile mû par des actionneurs selon au moins deux degrés de liberté en rotation, et à une plate-forme mobile mettant en oeuvre un tel procédé.

Les simulateurs, et en particulier les simulateurs de loisirs, comportent des cabines de conduite petites et légères. De telles cabines peuvent être mises en mouvement par des moteurs électriques. Ces moteurs, contrairement aux actionneurs à vérins hydrauliques des gros systèmes pour simulateurs professionnels (simulateurs de pilotage d'avions de ligne par exemple), ont des temps de réponse très courts. Ces courts temps de réponse, combinés à la légèreté des cabines, créent des discontinuités des mouvements de la cabine et des vibrations de la structure de la partie mécanique du simulateur. La solution connue pour y remédier consiste à commander les moteurs électriques avec des ordres de commande émis à une fréquence de récurrence d'environ 1 kHz, afin que les mouvements produits par ces ordres se produisent à des fréquences supérieures aux fréquences de résonance de certains éléments de la structure mécanique. Ainsi, pour des ordres élaborés à une fréquence de récurrence de 25 Hz (ce qui veut dire que les positions et attitudes de la cabine sont élaborées toutes les 40 ms), il faut interpoler environ 40 positions intermédiaires entre deux ordres consécutifs, afin de pouvoir envoyer une consigne à chaque moteur à chaque milliseconde. Dans tous les simulateurs connus à moteurs électriques, l'interpolation de la commande est effectuée séparément pour chaque moteur. Les circuits connus de commande de moteurs sont réalisés sur des cartes standard qui ne permettent pas de lier entre elles les commandes des différents moteurs d'un simulateur par une loi, en particulier par une loi complexe, qui permettrait de coordonner les différentes interpolations (qui sont indépendantes entre elles). Il résulte de cette impossibilité un phénomène couramment appelé «jerk » qui se produit entre deux ordres successifs. De plus, si les actionneurs de la cabine sont des moteurs équipés de réducteurs, ce phénomène provoque le «décollage » des engrenages au cours du mouvement de la cabine, et génère des chocs et du bruit.

La présente invention a pour objet un procédé de commande en position d'un solide mobile, mû par des actionneurs selon au moins deux degrés de liberté en rotation, permettant d'obtenir des mouvements de ce solide exempts de résonances et d'accélérations résiduelles parasites, sans production de bruits dans les organes de transmission de mouvements, pour une utilisation optimale des caractéristiques cinématiques des actionneurs, procédé qui puisse être facilement mis en oeuvre, indépendamment du calculateur central de commande.

La présente invention a également pour objet une plate-forme mobile, en particulier mais non exclusivement, une plate-forme de petit simulateur (d'une masse de 200 kg ou moins), dont les mouvements soient le plus fluides possible et pratiquement exempts de bruit, cette plate-forme pouvant être d'un modèle existant ou un nouveau modèle, la mise en oeuvre de l'invention sur cette plate-forme étant simple et n'augmentant pratiquement pas son prix de revient.

Le procédé conforme à l'invention est un procédé de commande en position d'un solide mobile, mû par des actionneurs selon au moins deux degrés de liberté en rotation, et il est caractérisé en ce que la commande de chacun des actionneurs est déduite de la commande globale du solide. En outre, la commande de chacun des actionneurs tient compte des commandes de tous les autres actionneurs. Selon un aspect de l'invention, la commande de chacun des actionneurs est obtenue par une méthode d'interpolation de quaternions.

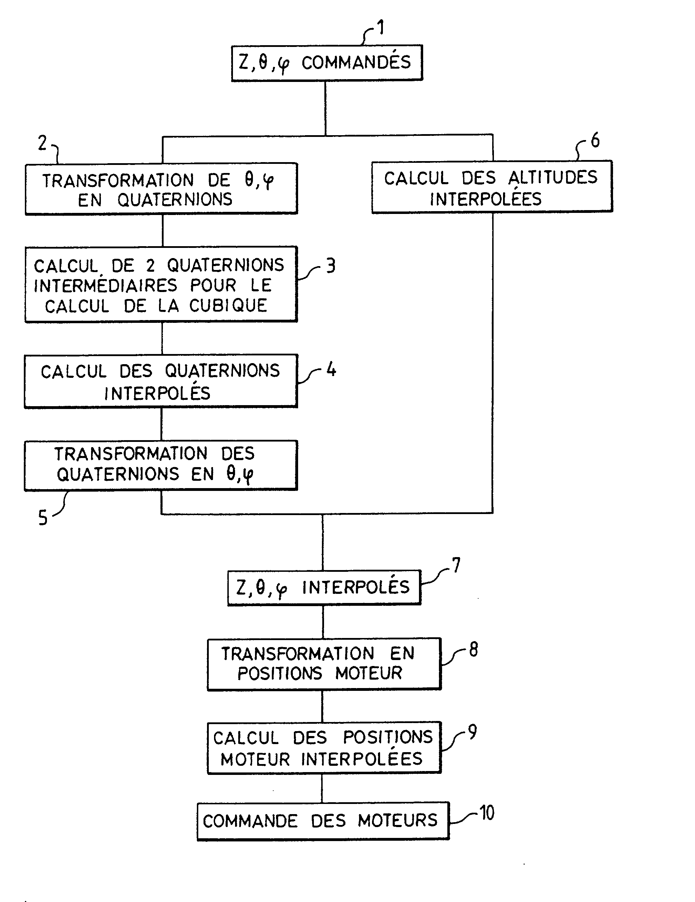

La présente invention sera mieux comprise à la lecture de la description détaillée d'un mode de réalisation, pris à titre d'exemple non limitatif et illustré par le dessin annexé, dont la figure unique est un graphe d'ordonnancement («flow chart» en anglais) d'un exemple de mise en oeuvre du procédé de l'invention.

L'invention est décrite ci-dessous en référence à un « petit» simulateur, c'est-à-dire un simulateur, tel qu'un simulateur grand public de conduite automobile, dont la partie mécanique mobile (plate-forme et cabine reproduisant un poste de conduite réel) est relativement légère (par exemple d'une masse de 200 kg ou moins, alors que dans les «grands» simulateurs, cette partie mobile a une masse de plusieurs tonnes), et dont les actionneurs sont des moteurs électriques, généralement équipés de réducteurs. Cependant, il est bien entendu que l'invention n'est pas limitée à cette seule application, et qu'elle peut être mise en oeuvre pour d'autres types de simulateurs (de plus grandes dimensions et/ou avec d'autres sortes d'actionneurs, ...), et pour mouvoir des solides autres que des cabines de simulateurs (essais de résistance d'appareils divers à des accélérations de différentes directions, éprouvettes contenant des liquides difficilement miscibles devant être mélangés, ...).

Le procédé de commande de l'invention consiste essentiellement à partir d'ordres de positions successives de la plate-forme, émis à une fréquence de récurrence relativement basse (par exemple d'environ 25 Hz), à produire par interpolation isotrope des ordres de position intermédiaires, ces ordres ne privilégiant pas une direction particulière d'interpolation. Cette interpolation est avantageusement réalisée en dehors du calculateur central du simulateur, par un circuit dédié ou par un micro-ordinateur. Dans ce cas, les différentes fonctions de sécurité (fins de course, limitations diverses, ...) sont avantageusement intégrées à ce circuit dédié ou au micro-ordinateur.

De façon générale, la méthode d'interpolation utilisée dans l'invention consiste à associer à chaque position commandée de la plate-forme un « quaternion » ou même un « bi-quaternion ». Les quaternions sont des éléments mathématiques connus en soi, par exemple d'après le livre « Computer Graphics », de Foley et al, édité par Addison-Wesley Publishing Company. Ayant déterminé ces quaternions pour les positions commandées, on effectue l'interpolation par quaternions pour chaque position intermédiaire (40 positions intermédiaires pour l'exemple cité de commandes à 25 Hz, pour obtenir des consignes de position des moteurs toutes les 1 ms), et on en déduit les positions intermédiaires successives de chaque actionneur. Ainsi, on arrive à lisser le mouvement global de la plate-forme mobile, et non pas le mouvement de chacun des actionneurs indépendamment de celui des autres actionneurs, comme cela se faisait selon l'art antérieur. Il en résulte, pour un simulateur à actionneurs électriques un niveau d'accélérations résiduelles du même ordre de grandeur que celui d'un simulateur à actionneurs hydrauliques, c'est-à-dire d'environ 0,02 G (alors que le corps humain ne ressent que les accélérations supérieures à environ 0,04 G).

Les quaternions sont déterminés de la façon suivante. Le passage d'une position de l'espace à une autre peut être entièrement défini par une rotation autour d'un vecteur de l'espace. Cette rotation peut être définie par un ensemble de quatre paramètres intégrant les coordonnées du vecteur et l'angle de la rotation. A l'aide de ces quatre paramètres, on peut construire un nombre complexe ayant une coordonnée réelle et trois coordonnées imaginaires, ce nombre complexe étant appelé quaternion. Pour déterminer lesdites positions intermédiaires de la plate-forme, on effectue les interpolations avec les quaternions, qui sont ensuite convertis en positions intermédiaires de la plate-forme, à partir desquelles il est facile de calculer les ordres de rotation des différents moteurs pour obtenir ces positions intermédiaires.

Pour effectuer l'interpolation, on pourrait penser à l'interpolation sphérique linéaire (connue sous l'appellation « slerp »), mais on ne peut pas l'appliquer de façon satisfaisante dans le cadre de la présente invention, car elle ne garantit pas la continuité de vitesses du mouvement au niveau des points de jonction des tronçons interpolés. Pour satisfaire cette condition, la présente invention prévoit d'utiliser l'équivalent, pour la sphère, de la spline cubique. De la même façon que l'on construit une spline cubique à l'aide d'une série de trois interpolations linéaires à partir des points d'un quadrilatère, on construit cette spline « sphérique » à l'aide de trois interpolations sphériques linéaires successives à partir de quatre points de la sphère. Ainsi, à partir de deux quaternions successifs de la suite de quaternions résultant des positions commandées avant interpolation, on construit d'abord deux quaternions intermédiaires, choisis de façon que les tangentes des segments adjacents de courbes cubiques soient continues. A cet effet, on utilise le quaternion précédent et le suivant dans ladite suite. On applique ensuite aux quatre quaternions la méthode de construction de spline cubique comme précisé ci-dessus. On obtient alors la cubique reliant lesdits deux quaternions successifs de la suite. Les positions interpolées de la plate-forme se déduisent des quaternions appartenant à cette cubique.

Les différentes positions de la plate-forme, aussi bien les positions commandées par le calculateur central que celles interpolées de la façon décrite ci-dessus sont déterminées en temps réel. Les moteurs actionnant les bras mobiles supportant la plate-forme doivent recevoir, comme précisé ci-dessus, des ordres à une fréquence de récurrence élevée (par exemple 1 kHz). Dans l'exemple décrit ci-dessous en référence à la figure unique du dessin, on a choisi de calculer deux positions auxiliaires interpolées par la méthode des quaternions entre deux positions commandées (par le calculateur central) successives. Les positions des moteurs déduites de ces positions de la plate-forme sont ensuite interpolées, avec une spline cubique, en nombre suffisant pour obtenir la fréquence de récurrence de commande de moteurs nécessaire pour obtenir le résultat recherché (fréquence supérieure aux diverses fréquences de résonance, et accélérations résiduelles négligeables). Dans l'exemple illustré sur le dessin, qui se rapporte à un système à trois degrés de liberté à moteurs électriques et plate-forme légère (environ 200 kg), la position de la plate-forme est repérée par son altitude Z, et son orientation par l'angle de tangage θ et par l'angle de roulis ϕ.

Sur le dessin, on a représenté en 1 l'étape de fourniture, par le calculateur central du système, des valeurs commandées (à une fréquence de récurrence de 25 Hz par exemple) Z, θ et ϕ. A l'étape 2, un circuit de calcul (par exemple un circuit spécialisé, différent du calculateur central) transforme θ et ϕ en quaternions. A l'étape 3, le circuit de calcul effectue le calcul de deux quaternions intermédiaires auxiliaires pour déterminer la spline cubique. A l'étape 4, il calcule les quaternions interpolés à l'aide de cette spline cubique, et à l'étape 5 il transforme ces quaternions interpolés en valeurs correspondantes de θ et ϕ. Parallèlement aux étapes 2 à 5, le circuit de calcul effectue, d'autre part, le calcul des altitudes Z interpolées.

Ainsi, à l'étape 7, le circuit de calcul obtient un ensemble de trois valeurs interpolées de Z, θ et ϕ pour chacune des positions interpolées (par exemple 40 positions interpolées entre deux positions successives commandées à l'étape 1). A l'étape 8, le circuit de calcul transforme chaque ensemble de trois valeurs interpolées de Z, θ et ϕ. en position (angulaire) correspondante de chacun des moteurs. A l'étape 9, il calcule les positions interpolées de ces moteurs, et à l'étape 10, il élabore les ordres de commande de chacun des moteurs.

Le procédé de l'invention consiste essentiellement à interpoler le mouvement global de la plate-forme de façon isotrope, assurant ainsi une très bonne continuité de mouvement.

Ainsi, grâce à la transformation des paramètres de rotations caractérisant les positions successives de la plate-forme en quaternions, et grâce à l'interpolation de ces quaternions, on réalise une interpolation qui ne dépend que de la position initiale et de la position finale de la plate-forme. L'utilisation d'une spline cubique sur une sphère pour interpoler la suite de quaternions assure, en outre, la continuité des vitesses du mouvement de la plate-forme.

## Revendications

1. Procédé de commande en position d'un solide mobile mû par des actionneurs selon au moins deux degrés de liberté en rotation, caractérisé en ce que la commande de chacun des actionneurs est déduite de la commande globale du solide.

2. Procédé selon la revendication 1, caractérisé en ce que la commande de chacun des actionneurs tient compte des commandes de tous les autres actionneurs.

3. Procédé selon la revendication 1 ou 2, caractérisé en ce que la commande de chacun des actionneurs est obtenue par une méthode d'interpolation de quatemions.

4. Procédé selon la revendication 3, caractérisé en ce que l'interpolation est effectuée par spline cubique.

5. Procédé selon l'une des revendications précédentes, caractérisé en ce que les ordres de positions successives du mobile sont émis à une fréquence de récurrence d'environ 25 Hz, alors que les commandes des actionneurs sont produites à une fréquence de récurrence d'environ 1 à 2 kHz.

6. Solide mobile selon au moins deux degrés de liberté en rotation, mû par des actionneurs électriques, et commandé par un calculateur, caractérisé en ce que des circuits spécifiques relient ce calculateur à tous les actionneurs.

7. Solide selon la revendication 6, caractérisé en ce que les circuits spécifiques sont des circuits d'interpolation isotrope.

8. Solide selon la revendication 7, caractérisé en ce que des fonctions de sécurité sont intégrées aux circuits spécifiques d'interpolation.

9. Solide selon la revendication 6 ou 7, caractérisé en ce qu'il est une plate-forme de simulateur.
